# EUROPEAN PATENT APPLICATION

(11) **EP 1 313 296 A2**
(43) Date of publication of application: **21.05.2003**
(21) Application number: 02025641.8
(22) Date of filing: 19.11.2002
(51) Int. Cl.: H04M 1/02

(54) **Rugged design and method for housing an electronic device**

(30) Priority: 20.11.2001 US 989507
(71) Applicant: MITSUBISHI DENKI KABUSHIKI KAISHA, Tokyo 100-8310 (JP)
(72) Inventor: Sommer, Henry David, Lawrenceville, Georgia 30044 (US)
(74) Representative: Sajda, Wolf E., Dipl.-Phys.

(57) **Abstract**

A rugged housing (200) is provided for an electronic device, such as a cellular telephone. The electronic device has sides extending across a length and width of the device, a top extending across the width and a thickness of the device, and a bottom extending across the width and thickness of the device. At least the sides of the device are shaped irregularly and unsymmetrically. The housing (200) includes a first portion (205) and a second portion (210). The first portion (205) surrounds the sides and the top of the electronic device in a continuous and seamless manner. The second portion (210) is connected to the first portion (205) and extends across the bottom of the electronic device. The second portion (210) may be disconnected for inserting component parts of the device into or removing component parts of the device from the housing (200). These component parts include a power source, a keypad, and/or a display. The second portion (210) may be integral to at least one component part inserted into the housing (200), such that the second portion (210) is connected to the first portion (205) by inserting the component parts into the housing (200), and the second portion (210) is disconnected from the first portion (205) by removing the component part from the housing (200).

## Description

### BACKGROUND

The present invention is directed to a housing and method for housing an electronic device, such as a telephone.

Electronic devices, such as cellular telephones, typically employ housings to encase the communication electronics to protect the electronics from wear and tear. Since such devices are typically irregularly shaped, it is difficult to enclose the device with a one-piece housing. Typically, the housing is formed of separate front and rear portions that are attached, e.g., snapped, together around the electronics. A battery is typically attached via an electrical connection onto the rear portion of the housing.

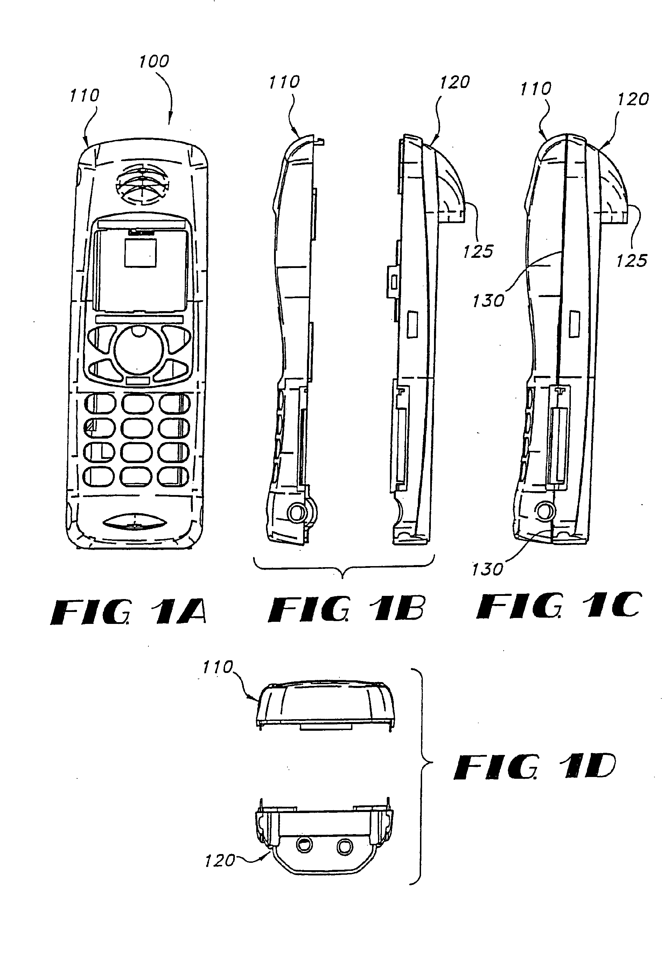

FIGS. 1A-1D illustrate various views of a conventional housing. FIG. 1A illustrates a front view of a housing 100. The front portion 110 typically includes a keypad, a display, etc. FIG. 1B illustrates a side view, with the front portion 110 and rear portion 120 disconnected. FIG. 1C illustrates a side view, with the front portion 110 and rear portion 120 connected. Although not shown in FIGS. 1B and 1C for ease of illustration, a battery is typically attached onto the rear portion 120 via an electrical connector 125. FIG. 1D illustrates a bottom view with the front portion 110 and rear portion 120 disconnected.

As can be seen from FIG. 1C, when the portions of the housing are connected, a seam 130 exists between the front portion 110 and the rear portion 120. This results in a housing that is not very rugged. Due to the seam, the housing tends to squeak and move when squeezed. Also, problems arise in fitting the different portions together, causing cosmetic and manufacturing problems, such as mismatch between the parts. This problem is further complicated by the emergence of interchangeable covers which have become popular as they allow the user to change the cosmetics of the telephone.

Attempts have been made to improve the design, e.g., by making the tolerance requirements of the size of each part very high, so that the parts fit closely together. While this improves the ruggedness of the housing, it adds to the cost.

To improve the fit of the different portions, ribs, lips, styling grooves and other features have been added to the housing. Examples of these are shown in FIG. 1B. While these improve the fit of the different portions, they add to the complexity and costs and result in a less rugged device.

To improve the durability of the housing, metal has been used instead of plastic to increase stiffness. This adds to the cost and sometimes the weight of the device.

There is thus a need for a simple, low-cost, rugged housing for an electronic device.

### SUMMARY

It is an object of the present invention to provide a rugged housing for an electronic device with a minimal number of parts.

This and other objects are met by a housing for an electronic device and a method for assembling the housing. According to an exemplary embodiment, the electronic device has sides extending across a length and width of the device, a top extending across the width and a thickness of the device, and a bottom extending across the width and thickness of the device. At least the sides of the device are shaped irregularly and unsymmetrically. The housing includes a first portion and a second portion. The first portion surrounds the sides and the top of the electronic device in a continuous and seamless manner. The second portion is connected to the first portion and extends across the bottom of the electronic device. The second portion may be disconnected from the first portion for inserting component parts of the device into or removing component parts of the device from the housing.

According to one embodiment, the electronic device may be a communication device, such as a cellular telephone. Component parts of the device that may be inserted into the housing by disconnecting the second portion include a power source, a keypad, and/or a display. The second portion may be integral to at least one component part inserted into the housing, such that the second portion is connected to the first portion by inserting the component part into the housing, and the second portion is disconnected from the first portion by removing the component part from the housing.

The first portion may include one or more windows allowing interaction with the electronic device by a user, e.g., allowing the user access to a display and/or a keypad. The window or windows may be open or formed of clear or translucent material.

According to an exemplary embodiment, the housing may be interchangeable with other housings for the electronic device.

### BRIEF DESCRIPTION OF THE DRAWINGS

FIGS. 1A-1D illustrate exemplary views of a conventional electronic device housing;
FIGS. 2A-2D illustrate exemplary views of an electronic device housing according to an exemplary embodiment; and
FIG. 3 illustrates an exemplary method for assembling an electronic device housing according to an exemplary embodiment.

### DETAILED DESCRIPTION

According to exemplary embodiments, a rugged housing design for an electronic device and a method for assembling such a housing are provided. The housing may be used to surround an irregularly and unsymmetrically shaped device, such as a cellular telephone.

FIGS. 2A-2D illustrate an exemplary housing design according to one embodiment. FIG. 2A illustrates a front view of the housing 200, including a first portion 205 and a second portion 210. According to an exemplary embodiment, the first portion 205 surrounds the top and sides of the electronic device in a continuous and seamless manner, and the second portion 210 surrounds extends across a bottom portion of the device.

The first portion 205 may include one or more windows covering components such as a keypad and/or a liquid crystal display (LCD), allowing interaction with a user. For example, in FIG 2A, there is a window covering the display and multiple keypad windows, one covering each of the keys. As another example, there may be one window covering the entire keypad and/or one window covering the keypad and the display. The window(s) may be open or include a clear or transparent cover for protecting the keypad, display, etc.

FIG. 2B illustrates a side view of the housing 200, with the bottom portion 210 disconnected. When the bottom portion 210 is disconnected, component parts such as a battery may be inserted through the bottom. The bottom portion 210 may be made integral to a component part of the device, e.g., the battery. Thus, when the component part is inserted, the bottom portion of the housing is connected to the rest of the housing.

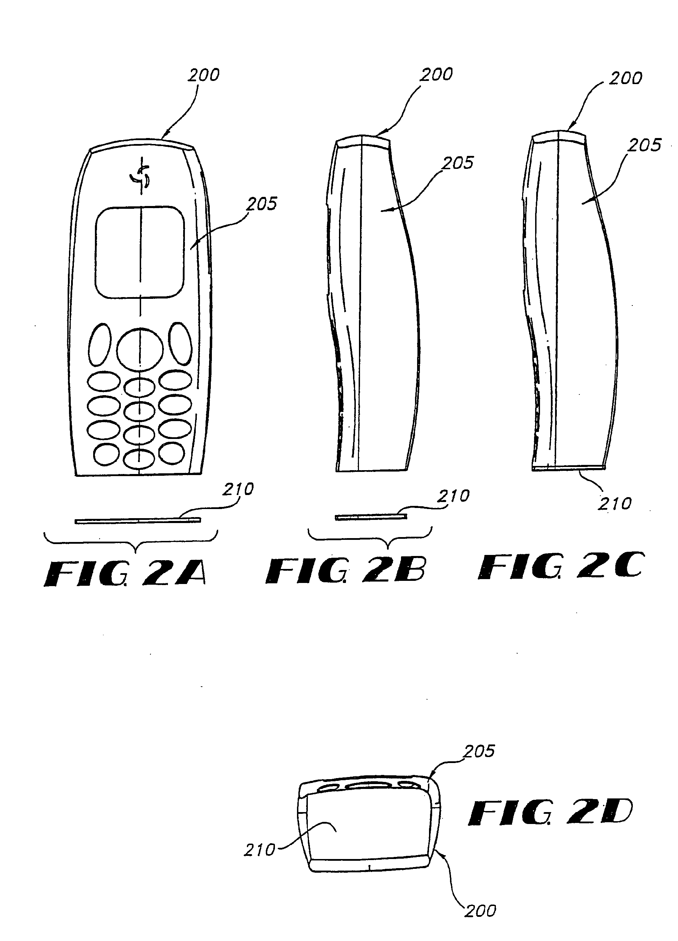

FIG. 2C illustrates a side view of the housing 200 with the bottom portion 210 connected. FIG. 2D illustrates a bottom view of the housing, including the portions 205 and 210.

As can be seen from FIG. 2C, there is a continuous seamless connection between the front, rear and top of the housing, forming a one-piece housing 200. This results in a rugged device. This housing has a much more solid feel than a housing such as that depicted in FIGS. 1A-1D and is free of the squeaks and rattles suffered by conventional housings. The appearance of the housing is also improved, since there is no styling groove between the case and cover.

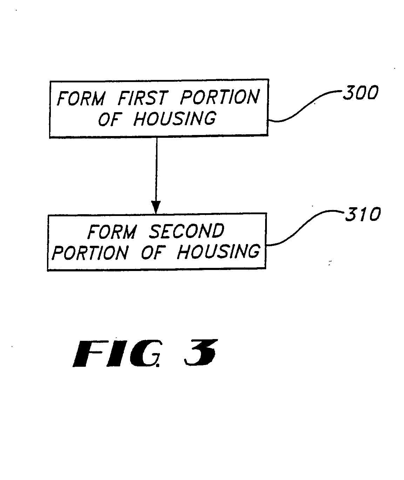

According to exemplary embodiments, a method for assembling a telephone includes the steps shown in FIG. 3. The method begins at step 300 at which a first portion of the housing is formed for surrounding the sides and the top of the electronic device in a continuous and seamless manner. The first portion may be formed to surround a device with sides that are shaped irregularly and unsymmetrically.

At step 310, a second portion of the housing is formed for extending across the bottom of the electronic device and connecting to the first portion of the housing. The second portion may be disconnected for inserting component parts of the device into or removing component parts of the device from the housing.

The portions of the housing may be formed by, e.g., injection molding. The molding may employ a floating core to form the inside between a normal cavity and core or a normal core for the inside with lifters for the front and rear.

Once the housing is formed, the electronic device may be surrounded with the housing in one of various different ways. For example, the component parts of the electronic device, which may be fastened to a printed circuit board (PCB), may be inserted into the cavity formed by the sides of the first portion of the housing, and the second portion may then be connected to the first portion to surround the bottom of the device.

Alternatively, only certain components of the device may be initially surrounded by the first portion, and the other components may be inserted into the housing at one or more additional steps. For example, a keypad and a display may be inserted through the window(s) in the first portion. Spring contacts may be used to hold these parts in place. Then, the material(s) covering the opening may be snapped into place. To repair the PCB, the window(s) and the display and/or keypad may be removed. As another alternative, the keypad and/or display may be inserted in place through the opening in the bottom of the phone. Next, the PCB may be inserted from the bottom and held in place either with snaps in the housing or screws. Also, a battery may be inserted through the bottom of the housing, before the second portion is connected to the first portion.

Alternatively, the second portion of the housing may be integral to the components of the device. For example, the PCB or battery may have a plastic part that closes off the end of the housing.

According to exemplary embodiments, a rugged housing is provided for an electronic device. In addition to being more rugged than conventional designs, the housing has further advantages. Also, the housing may be designed as a user changeable cosmetic cover.

Although described above as a housing for a cellular telephone, it will be appreciated that the housing may be applicable to any electronic device, e.g., any wireless communication device.

It should be understood that the foregoing description and accompanying drawings are by example only. A variety of modifications are envisioned that do not depart from the scope and spirit of the invention. The above description is intended by way of example only and is not intended to limit the present invention in any way.

## Claims

1. A housing for an electronic device, the device having sides extending across a length and width of the device, a top extending across the width and a thickness of the device, and a bottom extending across the width and thickness of the device, the housing (200) comprising:
- a first portion (205) for surrounding the sides and the top of the electronic device in a continuous and seamless manner, wherein at least the sides of the device are shaped irregularly and unsymmetrically; and
- a second portion (210) connected to the first portion (205) for extending across the bottom of the electronic device, wherein the second portion (210) may be disconnected for inserting components of the device into or removing component parts of the device from the housing (200).

2. The housing according to claim 1,
wherein the housing (200) surrounds component parts of a communication device.

3. The housing according to claim 1 or 2,
wherein the housing (200) surrounds component parts of a cellular telephone.

4. The housing according to any of claims 1 to 3,
wherein the component parts inserted or removed include at least one of a power source, a keypad, and a display.

5. The housing according to any of claims 1 to 4,
wherein the second portion (210) may be integral to at least one component part inserted into the housing (200), such that the second portion (210) is connected to the first portion (205) by inserting the component part into the housing, and the second portion (210) is disconnected from the first portion (205) by removing the component part from the housing (200).

6. The housing according to any of claims 1 to 5,
wherein the first portion (205) includes at least one window allowing interaction with the electronic device by a user.

7. The housing according to claim 6,
wherein the window allows access to a display or a keypad.

8. The housing according to claim 6,
wherein the window is open.

9. The housing according to claim 6,
wherein the window is formed of a clear or translucent material.

10. The housing according to any of claims 1 to 9,
wherein the housing (200) is interchangeable with other housings for the electronic device.

11. A method for assembling a housing for an electronic device, the device having sides extending across a length and width of the device, a top extending across the width and a thickness of the device, and a bottom extending across the width and thickness of the device, the method comprising the following steps:
- forming (300) a first portion (205) for surrounding the sides and the top of the electronic device in a continuous and seamless manner, wherein at least the sides of the device are shaped irregularly and unsymmetrically; and
- forming (310) a second portion (210) for connecting to the first portion (205) and for extending across the bottom of the electronic device, wherein the second portion (210) may be disconnected for inserting component parts of the device into or removing component parts of the device from the housing (200).

12. The method according to claim 11,
wherein the housing (200) surrounds component parts of a communication device.

13. The method according to claim 11 or 12,
wherein the housing (200) surrounds component parts of a cellular telephone.

14. The method according to any of claims 11 to 13,
wherein the component parts inserted or removed include at least one of a power source, a keypad, and a display.

15. The method according to any of claims 11 to 14,
wherein the second portion (210) may be integral to at least one component part inserted into the housing (200), such that the second portion (210) is connected to the first portion (205) by inserting the component part into the housing (200), and the second portion (210) is disconnected from the first portion (205) by removing the component part from the housing (200).

16. The method according to any of claims 11 to 15,
wherein the first portion (205) includes at least one window allowing interaction with the electronic device by a user.

17. The method according to claim 16,
wherein the window allows access to a display or a keypad.

18. The method according to claim 16,
wherein the window is open.

19. The method according to claim 16,
wherein the window is formed of a clear or translucent material.

20. The method according to any of claims 11 to 19,
wherein the housing (200) is interchangeable with other housings for the electronic device.
